# EUROPÄISCHE PATENTANMELDUNG

(11) **EP 1 705 431 A2**
(43) Veröffentlichungstag der Anmeldung: **27.09.2006**
(21) Anmeldenummer: 06450027.5
(22) Anmeldetag: 01.03.2006
(51) Int. Cl.: F24D 19/10

(54) **Verfahren zum Betreiben einer Warmwasserbereitungsanlage und Warmwasserbereitungsanlage**

(30) Priorität: 01.03.2005 AT 3432005
(71) Anmelder: Austria Email Aktiengesellschaft, 8720 Knittelfeld (AT)
(72) Erfinder: Ptak, Georg, 8750 Oberweg/Judenburg (AT)
(74) Vertreter: Sonn & Partner Patentanwälte

(57) **Zusammenfassung**

Die Erfindung betrifft ein Verfahren zum Betreiben einer Warmwasserbereitungsanlage (1) sowie eine Warmwasserbereitungsanlage (1) mit einem Pufferspeicher (2) mit einer Heizquelle (4) zum Wärmen von Heizwasser (5) und einem im Pufferspeicher (2) integrierten Warmwasserspeicher (3) zum indirekten Wärmen von Brauchwasser (10) über das erwärmte Heizwasser (5) mit einem Auslass (9) für das warme Heizwasser (5), einem Einlass (8) für das rücklaufende Heizwasser (5), einem Auslass (11) für das warme Brauchwasser (10), einem Einlass (12) für Kaltwasser sowie mit Anschlüssen (6, 7) für die Heizquelle (4) im Pufferspeicher (2), wobei ein Wärmetauscher (16) vorgesehen ist, der das Brauchwasser (10) vor dem Eintritt in den Warmwasserspeicher (3) über das erwärmte Heizwasser (5) des Pufferspeichers (2) vorwärmt. Zur Schaffung einer derartigen Warmwasserbereitungsanlage (1) mit optimaler Energieausnützung ist eine Einrichtung (20) zur Regelung der Strömung des Heizwassers (5) durch den Wärmetauscher (16) vorgesehen.

## Beschreibung

Die Erfindung betrifft ein Verfahren zum Betreiben einer Warmwasserbereitungsanlage, wobei mit einem Pufferspeicher mit einer Heizquelle Heizwasser erwärmt und mit einem im Pufferspeicher integrierten Warmwasserspeicher Brauchwasser indirekt über das erwärmte Heizwasser erwärmt wird, welches Brauchwasser vor dem Eintritt in den Warmwasserspeicher über einen Wärmetauscher mit Hilfe des im Pufferspeicher erwärmten Heizwassers vorgewärmt wird.

Weiters betrifft die Erfindung eine Warmwasserbereitungsanlage mit einem Pufferspeicher mit einer Heizquelle zum Wärmen von Heizwasser und einem im Pufferspeicher integrierten Warmwasserspeicher zum indirekten Wärmen von Brauchwasser über das erwärmte Heizwasser mit einem Auslass für das warme Heizwasser, einem Einlass für das rücklaufende Heizwasser, einem Auslass für das warme Brauchwasser, einem Einlass für Kaltwasser sowie mit Anschlüssen für die Heizquelle im Pufferspeicher, wobei ein Wärmetauscher vorgesehen ist, der primärseitig zwischen dem Auslass für das warme Heizwasser und dem Einlass für den Heizwasserrücklauf und der sekundärseitig zwischen dem Einlass für das kalte Brauchwasser und einer Kaltwasserleitung angeordnet ist, so dass eine Vorwärmung des Brauchwassers vor dem Eintritt in den Warmwasserspeicher über das erwärmte Heizwasser des Pufferspeichers erfolgt.

Schließlich betrifft die Erfindung auch eine Zusatzeinrichtung für eine derartige Warmwasserbereitungsanlage.

Bei Warmwasserspeichern oder Boilern wird das darin befindliche Wasser durch einen im Inneren des Warmwasserspeichers angeordneten Wärmetauscher aufgewärmt und auf einer gewünschten Temperatur gehalten. Die Warmwasserspeicher dienen zum Aufwärmen von Brauchwasser und bestehen üblicherweise aus einem Behälter, der zur Vermeidung von Wärmeverlusten isoliert ist und den Wärmetauscher enthält. Die Beheizung des Warmwasserspeichers kann durch einen Sonnenkollektor, eine externe Heizung, beispielsweise eine Festbrennstoffheizung oder eine ölgefeuerte Heizung, aber auch durch eine Wärmepumpe oder durch Fernwärme erfolgen. Das Fassungsvermögen des Warmwasserspeichers wird an die jeweiligen Erfordernisse entsprechend angepasst.

Beispielsweise beschreiben die AT 407 095 B oder die DE 196 25 206 A1 solche Warmwasserspeicher.

Zur Erwärmung von Heizwasser sind so genannte Pufferspeicher bekannt, in welchen das für die Heizungsanlage erforderliche Wasser erwärmt wird. Die Energie für die Erwärmung des Heizwassers kann dabei wieder von verschiedenen Quellen, wie z.B. Sonnenkollektoren, Festbrennstoff oder ölgefeuerte Heizkessel, Wärmepumpen, Gas- oder Elektrodurchlauferhitzer stammen. Die Pufferung dient einerseits zum Speichern der Wärme für Zeiten in denen die Wärmequelle nicht zur Verfügung steht und andererseits dazu ein häufiges Ein- und Ausschalten der Wärmequelle zu vermeiden.

Weiters sind so genannte Speicher in Speichersystemen bekannt, die eine Kombination aus Heizungspufferspeicher und Brauchwasserspeicher bilden. Dabei ist im Pufferspeicher zum Wärmen des Heizwassers ein korrosionsgeschützter, also z.B. emaillierter Warmwasserspeicher, integriert, in dem das Brauchwasser über die Oberfläche des Warmwasserspeichers über das erwärmte Heizwasser aufgewärmt wird. Der Warmwasserspeicher ist dabei üblicherweise im oberen Bereich des Pufferspeichers, in dem sich das wärmste Heizwasser befindet, angeordnet. Dadurch wird eine kompakte Einheit aus beiden Speichern geschaffen.

Nachteilig bei solchen kombinierten Speichersystemen ist, dass beim Entnehmen von warmem Brauchwasser aus dem Warmwasserspeicher der obere Bereich des Pufferspeichers abgekühlt wird bzw. durch den Übergang der Wärme aus dem Pufferspeicher in den abgekühlten Warmwasserspeicherbereich durch konvektiven Wärmeübergang das ursprünglich sehr heiße Heizwasser im Puffer abgekühlt wird und dadurch mittelwarmes Wasser entsteht. Im Falle der Erwärmung des Heizwassers mittels Sonnenkollektoren reicht dieses mittelwarme Wasser weit in den oberen Aufheizbereich der Heizschlange der solaren Heizung hinein. Da ein Sonnenkollektor um so besser Wärme liefern kann je kühler das zuströmende Wasser ist, wird dadurch der Wirkungsgrad des Sonnenkollektors deutlich reduziert. Wenn die Wiederaufheizung durch den Heizkessel erfolgt, sind die Wiederaufwärmzeiten kürzer, da das Heizwasser noch warm ist, so dass es zu einem häufigeren Ein- und Ausschalten der Heizung kommt, was ebenfalls unerwünscht ist.

Nachteilig ist außerdem, dass der im Pufferspeicher enthaltene Warmwasserspeicher ein relativ geringes Volumen aufweist und durch die relativ geringe Oberfläche verhältnismäßig langsam wieder erwärmt wird, so dass die nutzbare Brauchwassermenge relativ klein ist.

Ein Verfahren bzw. eine Warmwasserbereitungsanlage der gegenständlichen Art ist aus der DE 101 63 984 A1 bekannt, wobei keine Regelung der Temperaturen bei der Trinkwassererwärmung im Wärmetauscher erfolgt. Durch die resultierenden Schwankungen der Temperatur im Sekundärkreis erfolgt keine optimale Einschichtung von kaltem Wasser im Pufferspeicher, woraus eine reduzierte Wärmeausbeute resultiert.

Die DE 103 02 176 A1 beschreibt ein Verfahren und eine Vorrichtung zur Regelung der Temperatur des Trinkwassers in einem mittels Heizwasser beheizten Durchlauferhitzer, wobei die Temperatur im Sekundärkreislauf auf einem Sollwert gehalten wird.

Ziel der vorliegenden Erfindung ist daher die Schaffung eines oben genannten Verfahrens bzw. einer oben genannten Warmwasserbereitungsanlage, durch welche sowohl das im Pufferspeicher befindliche Heizwasser als auch das im Warmwasserspeicher befindliche Brauchwasser eine möglichst hohe Temperatur haben, und dass die gesamte im System vorhandene Wärme in möglichst wenig Wassermasse konzentriert ist. Das Verfahren bzw. die Warmwasserbereitungsanlage soll möglichst einfach und kostengünstig durchführbar bzw. aufgebaut sein. Nachteile des Standes der Technik sollen vermieden bzw. reduziert werden.

Gelöst wird die erfindungsgemäße Aufgabe in verfahrensmäßiger Hinsicht dadurch, dass die Strömung des Heizwassers durch den Wärmetauscher mit Hilfe einer Regelungseinrichtung geregelt wird. Durch die Vorwärmung des Brauchwassers wird das Kaltwasser so weit vorgewärmt, dass es im Pufferspeicher zu einer geringeren Abkühlung des Heizwassers kommt. Diese aktive und gezielte Verwendung des erwärmten Heizwassers zum Vorwärmen des Brauchwassers führt nicht zur Bildung von mittelwarmem Heizwasser im Pufferspeicher mit den oben erwähnten Nachteilen. Durch die Strömungsregelung kann der Energieübergang vom erwärmten Heizwasser in das kalte Brauchwasser eingestellt werden. Das Verfahren zeichnet sich durch besondere Einfachheit, welche im einfachsten Fall durch die Anordnung lediglich eines Wärmetauschers gekennzeichnet ist, aus.

Die Förderung des erwärmten Heizwassers aus dem Pufferspeicher in den Wärmetauscher zur Vorwärmung des Brauchwassers wird vorzugsweise in Abhängigkeit der Strömung des Brauchwassers gesteuert, indem der Wärmetauscher nur dann vom Heizwasser durchströmt wird, wenn eine Entnahme des Brauchwassers erfasst wird. Dies bedeutet, dass bei Entnahme von warmem Brauchwasser die Strömung in der Kaltwasserleitung, welche den Warmwasserspeicher speist, erfasst wird und nur dann der externe Wärmetauscher von warmem Heizwasser durchströmt wird, so dass dessen Wärme an das Kaltwasser zur Vorwärmung des Brauchwassers abgegeben werden kann.

Vorteilhafterweise wird das vorgewärmte Brauchwasser in den unteren Bereich des Wasserspeichers geführt, so dass eine optimale Schichtung des Wassers resultiert.

Vorteilhafterweise wird das im Wärmetauscher abgekühlte zur Erwärmung des Kaltwassers verwendete Heizwasser in den unteren Bereich des Pufferspeichers rückgeführt. Durch diese Maßnahmen wird die denkbar beste Schichtung im Pufferspeicher erreicht, wodurch das Warmwasser oben und das Kaltwasser unten angeordnet und deutlich weniger als bei bisherigen Speichersystemen durchmischt wird. Dadurch resultiert eine optimale Energieausnützung.

Vorteilhafterweise wird das Heizwasser im Wärmetauscher auf eine Temperatur unter 30°C abgekühlt. Diese Rücklauftemperatur des Heizwassers kann mittels eines thermischen Reglers eingestellt werden, welcher bei steigender Temperatur schließt und nach Austritt aus dem Wärmetauscher auf ein möglichst niedriges Temperaturniveau fällt. Somit kann die Energiequelle zur Aufwärmung des Heizwassers, beispielsweise ein Sonnenkollektor, auf einem besseren Wirkungsgrad gehalten werden.

Gelöst wird die erfindungsgemäße Aufgabe auch durch eine oben genannte Warmwasserbereitunsanlage, bei der eine Einrichtung zur Regelung der Strömung des Heizwassers durch den Wärmetauscher vorgesehen ist. Wie bereits oben erwähnt, wird durch relativ einfache und kostengünstige Maßnahmen eine bessere Energieausnützung erzielt. Durch die Wasserbereitungsanlage kann die nutzbare Warmwassermenge deutlich vergrößert werden. Durch die Pufferung des Warmwassers ist praktisch der gesamte Warmwasserspeicherinhalt verfügbar und im Wesentlichen unbeschränkt warmes Brauchwasser entnehmbar, sofern die Zapfmengen der Übertragungsleistung des Wärmetauschers samt zusätzlicher Fläche des Behälters und des Heizkessels entsprechen. Da das Brauchwasser sehr schnell auf hohe Temperaturen gebracht wird, ist die Gefahr der Vermehrung schädlicher Keime, wie z.B. Legionellen, deutlich reduziert. Über die Regeleinrichtung, welche beispielsweise durch ein Regelventil gebildet sein kann, ist eine Einstellung der Wärmeübertragung vom Heizwasser zum Brauchwasser möglich. Darüber hinaus kann mit einem derartigen thermischen Regler die Rücklauftemperatur des Heizwassers auf möglichst niedrigem Niveau, vorzugsweise unter 30°C, gehalten werden. Ist das Heizwasser auf einem niedrigeren Temperaturniveau, kann die Heizquelle, beispielsweise der Solarkollektor, auf einem höheren Wirkungsgrad arbeiten. Die erfindungsgemäße Anordnung kann auch nachträglich an bestehende Speichersysteme angebaut werden.

Grundsätzlich werden an den Wärmetauscher keine besonderen Erfordernisse gerichtet und kann dieser je nach erforderlicher Brauchwassermenge in unterschiedlicher Leistung ausgebildet werden. Beispielsweise kann der Wärmetauscher durch einen Plattenwärmetauscher gebildet sein.

Gemäß einem weiteren Merkmal der Erfindung ist ein Sensor zur Detektion der Strömung des Brauchwassers angeordnet. Somit wird die Entnahme warmen Brauchwassers aus dem Warmwasserspeicher erkannt, worauf entsprechende Schritte zur Nachfüllung des Warmwasserspeichers mit vorgewärmten Wasser gesetzt werden können.

Der Strömungssensor kann durch einen Strömungsschalter gebildet sein, der vorzugsweise in der Kaltwasserleitung angeordnet ist. Theoretisch könnte der Strömungsschalter auch in jener Leitung angeordnet sein, die vom Wärmetauscher zum Einlass für das kalte Brauchwasser führt. Nachteilig dabei ist jedoch, dass der Strömungssensor somit einer höheren Temperatur ausgesetzt ist, wodurch dieser eine geringere Lebensdauer aufweist.

Zur Förderung des Heizwassers durch den Wärmetauscher ist eine Pumpe, vorzugsweise in der Verbindung zwischen dem Wärmetauscher und dem Einlass für den Heizwasserrücklauf angeordnet. Auch hier kann theoretisch die Umweltspumpe auch in der Verbindung zwischen dem Wärmetauscher und dem Auslass für das warme Heizwasser angeordnet sein, wobei auch hier jedoch größere Probleme auftreten, da die Umweltspumpe einer höheren Temperatur ausgesetzt ist.

Vorteilhafterweise ist die Pumpe mit dem Strömungssensor verbunden, so dass eine Regelung der Pumpe in Abhängigkeit des Strömungssensors erfolgen kann. Das bedeutet, dass nur dann Heizwasser durch den Wärmetauscher gepumpt wird, wenn auch aktiv Brauchwasser entnommen wird.

Gelöst wird die erfindungsgemäße Aufgabe auch durch eine Zusatzeinrichtung für eine oben beschriebene Warmwasserbereitungsanlage, welche durch einen Wärmetauscher gekennzeichnet ist, der primärseitig zwischen dem Auslass für das warme Heizwasser und dem Einlass für den Heizwasserrücklauf und der sekundärseitig zwischen dem Einlass für das kalte Brauchwasser und einer Kaltwasserleitung angeordnet ist, so dass eine Vorwärmung des Brauchwassers vor dem Eintritt in den Warmwasserspeicher über das erwärmte Heizwasser des Pufferspeichers erfolgt, wobei eine Einrichtung zur Regelung der Strömung des Heizwassers durch den Wärmetauscher vorgesehen ist.

Die Vorteile der Zusatzeinrichtung gehen aus den oben beschriebenen Vorteilen der Warmwasserbereitungsanlage und des Verfahrens zum Betreiben der Warmwasserbereitungsanlage hervor.

Die vorliegende Erfindung wird anhand der beigefügten Zeichnungen näher erläutert. Darin zeigen: Fig. 1 eine Warmwasserbereitungsanlage gemäß dem Stand der Technik; Fig. 2 eine Ausführungsform einer Warmwasserbereitungsanlage gemäß der vorliegenden Erfindung; und Fig. 3 die Anordnung einer erfindungsgemäßen Warmwasserbereitungsanlage in einem gesamten Heizungssystem.

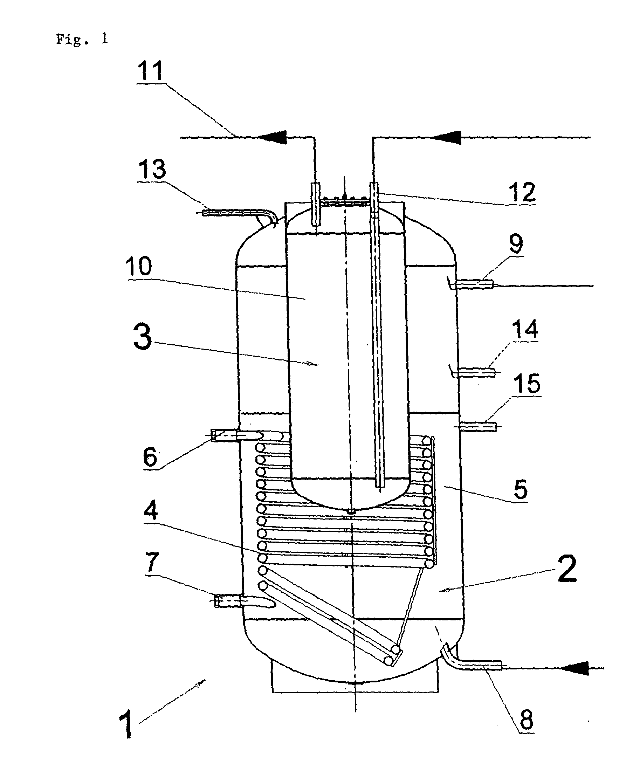

Fig. 1 zeigt eine Warmwasserbereitungsanlage 1 bestehend aus einem so genannten Speicher-in-Speicher-System, bei dem ein Pufferspeicher 2 und ein Warmwasserspeicher 3 miteinander kombiniert sind. Der Pufferspeicher 2 weist eine Heizquelle 4, beispielsweise einen Glatt- oder Rippenrohr-Wärmetauscher auf, der zur Erwärmung des im Pufferspeicher 2 befindlichen Heizwassers 5 dient. Die Heizquelle 4 im Pufferspeicher 2 weist Anschlüsse 6, 7 auf, die mit einer beliebigen Heizeinrichtung, wie z.B. einem Solarkollektor, einer Wärmepumpe oder einem Fernwärme-System oder dgl., angeschlossen werden kann. Das Heizwasser 5 wird über einen Einlass 8 in den Pufferspeicher 2 rückgeführt und über einen Auslass 9 dem Heizkreislauf zugeführt. Der Pufferspeicher 2 besteht üblicherweise aus einem Stahlgehäuse, der mit einer Isolierung aus Weich- oder Hartschaum umgeben ist (nicht dargestellt). Je nach Größe des Heizungssystems ist das Volumen des Pufferspeichers 2 unterschiedlich groß. Im Pufferspeicher 2 ist an dessen oberen Seite ein Warmwasserspeicher 3 integriert, der zum Erwärmen des Brauchwassers 10 dient. Der Warmwasserspeicher 3 ist aus korrosionsbeständigem Material, insbesondere emailliertem Metall, hergestellt. Das im Warmwasserspeicher 3 befindliche Brauchwasser 10 wird somit über das Heizwasser 5 im Pufferspeicher 1 erwärmt. Zur Entnahme des warmen Brauchwassers 10 befindet sich ein entsprechender Auslass 11 am Warmwasserspeicher 3. Über einen Einlass 12 wird dem Warmwasserspeicher 3 Kaltwasser zugeführt. Weiters kann der Pufferspeicher 2 eine Entlüftung 13 und einen Anschluss 14 für eine Fußbodenheizung sowie einen höher angeordneten Heizungsrücklauf 15 aufweisen.

Wird nun bei einer derartigen Warmwasserbereitungsanlage 1 warmes Brauchwasser 10 über den Auslass 11 entnommen, fließt über den Einlass 12 automatisch Kaltwasser nach, wodurch die Temperatur des Brauchwassers 10 im Warmwasserspeicher 3 absinkt und dem Heizwasser 5 im Pufferspeicher 2 Wärme entzieht. Dadurch wird das ursprünglich sehr heiße Heizwasser 5 im Pufferspeicher 2, welches beispielsweise auf 70-80°C erwärmt wurde, abgekühlt und es entsteht nur mittelwarmes Heizwasser 5 im Pufferspeicher 2. Wird die Heizquelle 4 durch einen Sonnenkollektor gespeist, so ragt nun das mittelwarme Heizwasser 5 weit in den oberen Aufheizbereich der Heizschlange der solaren Heizung. Dadurch wird der Wirkungsgrad des Sonnenkollektors reduziert, da ein Sonnenkollektor um so besser Wärme liefern kann, je kühler das zuströmende Wasser ist. Wenn die Wiederaufheizung durch einen Heizkessel erfolgt, dann sind die Wiederaufwärmzeiten kürzer, da das Heizwasser 5 noch warm ist und es kommt zu einem häufigeren Ein- und Ausschalten der Heizung, was ebenfalls unerwünscht ist.

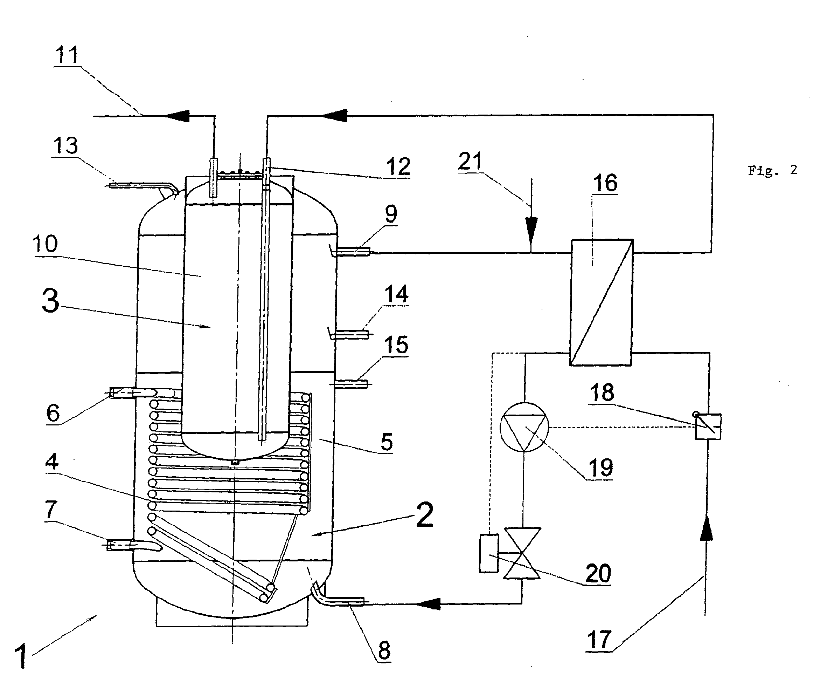

Fig. 2 zeigt eine Warmwasseraufbereitungsanlage 1 gemäß der vorliegenden Erfindung, wobei ein Wärmetauscher 16 angeordnet ist, der primärseitig zwischen dem Auslass 9 für das warme Heizwasser 5 und dem Einlass 8 für den Heizwasserrücklauf angeordnet ist. Sekundärseitig wird der Wärmetauscher 16 zwischen dem Einlass 12 für das kalte Brauchwasser 10 und einer Kaltwasserleitung 17 angeordnet. Somit wird das kalte Brauchwasser vor dem Eintritt in den Warmwasserspeicher 3 durch den Wärmetauscher, der durch das aufgewärmte Heizwasser 5 versorgt wird, aufgewärmt. Dadurch kommt das Brauchwasser 10 vorgewärmt in den Warmwasserspeicher 3. Das warme und kalte Heizwasser 5 wird im Bereich des Pufferspeichers 2 so verteilt, dass die denkbar beste Schichtung entsteht. Das warme Heizwasser 5 befindet sich oben und das im Wärmetauscher 16 abgekühlte Heizwasser 5 wird in den unteren Bereich des Pufferspeichers 2 eingelassen. Dadurch kommt es zu einer deutlich geringeren Durchmischung des Heizwassers 5 und somit zu einer sehr guten Energieausnützung. Es erfolgt eine aktive Schichtung des Temperaturniveaus im Pufferspeicher 2. Der Wärmetauscher 16 kann beispielsweise durch einen Plattenwärmetauscher gebildet sein und wird je nach Erfordernissen größer oder kleiner dimensioniert werden.

Zur Detektion der Strömung des Brauchwassers ist vorzugsweise in der Kaltwasserleitung 17 ein Sensor 18 zur Detektion der Strömung, vorzugsweise ein Strömungsschalter, angeordnet. Im PrimärKreislauf des Wärmetauschers 16, vorzugsweise in der Leitung zwischen Wärmetauscher 16 und Anschluss 8 für den Heizwasserrücklauf, ist eine Pumpe 19 angeordnet, welche vorzugsweise durch den Strömungssensor 18 gesteuert wird. Weiters kann ein Regelventil 20 in der Leitung zwischen Wärmetauscher 16 und Anschluss 8 für den Heizwasserrücklauf angeordnet sein, durch den das Temperaturniveau des rücklaufenden abgekühlten Heizwassers 5 eingestellt werden kann. Mit dem Wärmetauscher 16 kann auch die Leitung 21 des Heizungsvorlaufs des Heizkessels verbunden werden, damit der Wärmetauscher 16 bei eingeschalteter Heizung direkt über die Heizungsvorlaufleitung 21 mit Wärmeenergie versorgt werden kann.

Die Vorteile der dargestellten Wärmebereitungsanordnung 1 bestehen darin, dass das Brauchwasser 10 bereits vorgewärmt in den Wärmespeicher 3 gelangt, wodurch die Abkühlung des im Pufferspeicher 2 befindlichen Heizwassers 5 geringer ausfällt. Durch die gezielte Entnahme des Heizwassers 5 aus dem Pufferspeicher 2 und die gezielte Abkühlung im Wärmetauscher 16 und die Zurückführung über den Einlass 8 bringt eine aktive Schichtung des Heizwassers 5 im Pufferspeicher 2, so dass das warme Heizwasser 5 im oberen Bereich und das abgekühlte Heizwasser 5 im unteren Bereich des Pufferspeichers 2 angeordnet ist. Dadurch kommt es zu einer deutlich geringeren Vermischung des Heizwassers 5 und somit zu einer geringeren Abkühlung des für die Erwärmung des Warmwasserspeichers 3 im oberen Bereich angeordneten Heizwassers 5 resultierend in einer besseren Energieausnützung.

Da die Vorwärmung im Wärmetauscher 16 sehr schnell erfolgt und auf einem für die Kalkbildung niedrigem Temperaturniveau, findet die Kalkbildung nur im Inneren des Speichers statt, wo sie sich nicht so schädlich auswirkt.

Die erfindungsgemäße Anordnung führt zu einer deutlichen Vergrößerung der nutzbaren Menge an warmem Brauchwasser 10. Durch die Pufferung des Warmwassers ist im Wesentlichen der gesamte Inhalt des Warmwasserspeichers verfügbar und es ist im Wesentlichen unbeschränkt warmes Brauchwasser 10 entnehmbar, wenn die Zapfmenge der Übertragungsleistung des Wärmetauschers 16 samt zusätzlicher Fläche des Behälters und des Heizkessels entsprechen.

Da das Wasser sehr schnell auf hohe Temperaturen gebracht werden kann, ist die Gefahr der Züchtung von schädlichen Keimen, wie z.B. Legionellen, reduziert.

Der Einbau der erfindungsgemäßen Warmwasserbereitungsanlage ist sehr einfach auch nachträglich durch Hinzufügen des Wärmetauschers 16 möglich.

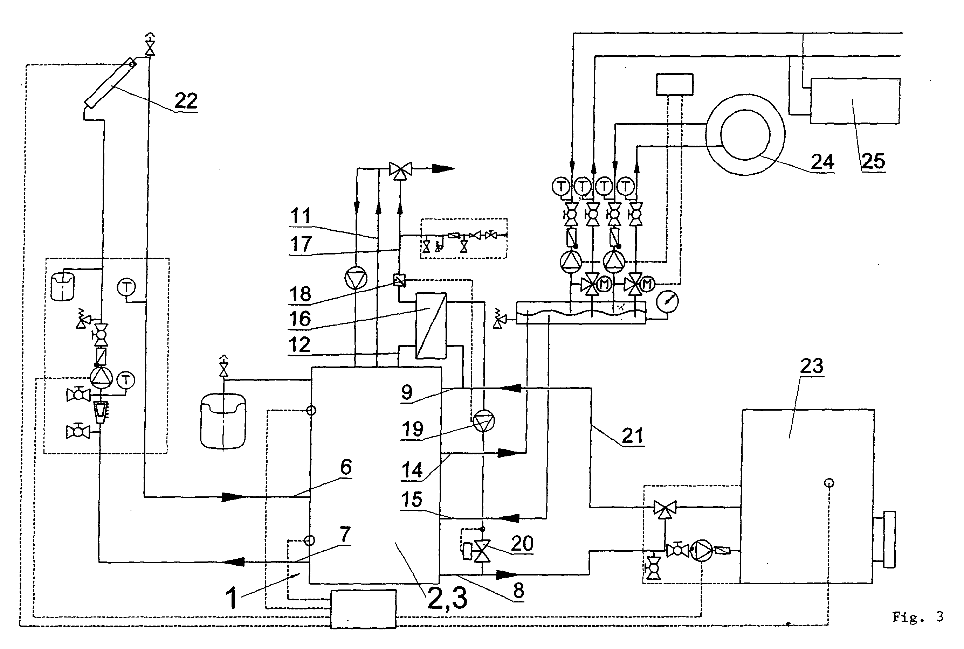

Fig. 3 zeigt eine weitere schematische Anordnung eines erfindungsgemäß ausgebildeten Warmwasserbereitungssystems 1, wobei der aus Pufferspeicher 2 und Warmwasserspeicher 3 kombinierte Speicher der besseren Übersicht halber nicht detailliert eingezeichnet wurde. Mit der im Pufferspeicher 2 befindlichen Heizquelle 4 ist über die Anschlüsse 6, 7 ein Solarkollektor 22 verbunden. Der Wärmetauscher 16 ist primärseitig mit dem Auslass 9 für das erwärmte Heizwasser 5 und dem Einlass 8 für den Heizungsrücklauf über die Pumpe 19 und die Regeleinrichtung 20 verbunden. Sekundärseitig ist der Wärmetauscher 16 mit einer Kaltwasserleitung 17, in der sich ein Strömungssensor 18 befinden kann, und dem Einlass 12 für das kalte Brauchwasser 10 verbunden. Ein Heizkessel 23 dient zur Aufheizung des Heizwassers 5, wenn der Solarkollektor 22 nicht verfügbar ist. Ist der Heizkessel 23 aktiv, kann auch der Wärmetauscher 16 direkt von diesem gespeist werden, was über die Heizvorlaufleitung 21 erfolgt. Über die Anschlüsse 14, 15 ist eine Fußbodenheizung 24 und Heizungsradiatoren 25 über entsprechende Einstellventile verbunden. Anstelle des Sonnenkollektors 22 und des Heizkessels 23 können auch andere Energiequellen, wie z.B. Fernwärme oder andere Verbrennungsöfen oder dgl., angeordnet sein.

## Patentansprüche

1. Verfahren zum Betreiben einer Warmwasserbereitungsanlage (1), wobei mit einem Pufferspeicher (2) mit einer Heizquelle (4) Heizwasser (5) erwärmt und mit einem im Pufferspeicher (2) integrierten Warmwasserspeicher (3) Brauchwasser (10) indirekt über das erwärmte Heizwasser (5) erwärmt wird, welches Brauchwasser (10) vor dem Eintritt in den Warmwasserspeicher (3) über einen Wärmetauscher (16) mit Hilfe des im Pufferspeicher (2) erwärmten Heizwassers (5) vorgewärmt wird, **dadurch gekennzeichnet, dass** die Strömung des Heizwassers (5) durch den Wärmetauscher (16) mit Hilfe einer Regelungseinrichtung (20) geregelt wird.

2. Verfahren nach Anspruch 1, **dadurch gekennzeichnet, dass** die Förderung des erwärmten Heizwassers (5) durch den Wärmetauscher (16) in Abhängigkeit der Strömung des Brauchwassers (10) gesteuert wird, indem der Wärmetauscher (16) nur dann vom Heizwasser (5) durchströmt wird, wenn eine Entnahme des Brauchwassers (10) erfasst wird.

3. Verfahren nach einem der Ansprüche 1 bis 2, **dadurch gekennzeichnet, dass** das vorgewärmte Brauchwasser (10) in den unteren Bereich des Warmwasserspeichers (3) geführt wird.

4. Verfahren nach einem der Ansprüche 1 bis 3, **dadurch gekennzeichnet, dass** das im Wärmetauscher (16) abgekühlte Heizwasser (5) in den unteren Bereich des Pufferspeichers (2) rückgeführt wird.

5. Warmwasserbereitungsanlage (1), mit einem Pufferspeicher (2) mit einer Heizquelle (4) zum Wärmen von Heizwasser (5) und einem im Pufferspeicher (2) integrierten Warmwasserspeicher (3) zum indirekten Wärmen von Brauchwasser (10) über das erwärmte Heizwasser (5), mit einem Auslass (9) für das warme Heizwasser (5), einem Einlass (8) für das rücklaufende Heizwasser (5), einem Auslass (11) für das warme Brauchwasser (10), einem Einlass (12) für Kaltwasser, sowie mit Anschlüssen (6, 7) für die Heizquelle (4) im Pufferspeicher (2), wobei ein Wärmetauscher (16) vorgesehen ist, der primärseitig zwischen dem Auslass (9) für das warme Heizwasser (5) und dem Einlass (8) für den Heizwasserrücklauf, und der sekundärseitig zwischen dem Einlass (12) für das kalte Brauchwasser (10) und einer Kaltwasserleitung (17) angeordnet ist, so dass eine Vorwärmung des Brauchwassers (10) vor dem Eintritt in den Warmwasserspeicher (3) über das erwärmte Heizwasser (5) des Pufferspeichers (2) erfolgt, **dadurch gekennzeichnet, dass** eine Einrichtung (20) zur Regelung der Strömung des Heizwassers (5) durch den Wärmetauscher (16) vorgesehen ist.

6. Warmwasserbereitungsanlage nach Anspruch 5, **dadurch gekennzeichnet, dass** der Wärmetauscher (16) durch einen Plattenwärmetauscher gebildet ist.

7. Warmwasserbereitungsanlage nach Anspruch 5 oder 6, **dadurch gekennzeichnet, dass** ein Sensor (18) zur Detektion der Strömung des Brauchwassers (10) angeordnet ist.

8. Warmwasserbereitungsanlage nach Anspruch 7, **dadurch gekennzeichnet, dass** der Strömungssensor (18) durch einen Strömungsschalter gebildet ist.

9. Warmwasserbereitungsanlage nach Anspruch 7 oder 8, **dadurch gekennzeichnet, dass** der Strömungssensor (18) in der Kaltwasserleitung (17) angeordnet ist.

10. Warmwasserbereitungsanlage nach einem der Ansprüche 5 bis 9, **dadurch gekennzeichnet, dass** eine Pumpe (19) zur Förderung des Heizwassers (5) durch den Wärmetauscher (16) angeordnet ist.

11. Warmwasserbereitungsanlage nach Anspruch 10, **dadurch gekennzeichnet, dass** die Pumpe (19) in der Verbindung zwischen dem Wärmetauscher (16) und dem Einlass (8) für den Heizwasserrücklauf angeordnet ist.

12. Warmwasserbereitungsanlage nach Anspruch 10 oder 11, **dadurch gekennzeichnet, dass** die Pumpe (19) mit dem Strömungssensor (18) verbunden ist.

13. Warmwasserbereitungsanlage nach einem der Ansprüche 5 bis 12, **dadurch gekennzeichnet, dass** die Regeleinrichtung (20) durch ein Regelventil gebildet ist.

14. Zusatzeinrichtung für eine Warmwasserbereitungsanlage (1) nach einem der Ansprüche 5 bis 13, **gekennzeichnet durch** einen Wärmetauscher (16), der primärseitig zwischen dem Auslass (9) für das warme Heizwasser (5) und dem Einlass (8) für den Heizwasserrücklauf, und der sekundärseitig zwischen dem Einlass (12) für das kalte Brauchwasser (10) und einer Kaltwasserleitung (17) angeordnet ist, so dass eine Vorwärmung des Brauchwassers (10) vor dem Eintritt in den Warmwasserspeicher (3) über das erwärmte Heizwasser (5) des Pufferspeichers (2) erfolgt, wobei eine Einrichtung (20) zur Regelung der Strömung des Heizwassers (5) **durch** den Wärmetauscher (16) vorgesehen ist.

15. Zusatzeinrichtung nach Anspruch 14, **dadurch gekennzeichnet, dass** der Wärmetauscher (16) durch einen Plattenwärmetauscher gebildet ist.

16. Zusatzeinrichtung nach Anspruch 14 oder 15, **dadurch gekennzeichnet, dass** ein Sensor (18) zur Detektion der Strömung des Brauchwassers (10) vorgesehen ist.

17. Zusatzeinrichtung nach Anspruch 16, **dadurch gekennzeichnet, dass** der Strömungssensor (18) durch einen Strömungsschalter gebildet ist.

18. Zusatzeinrichtung nach Anspruch 16 oder 17, **dadurch gekennzeichnet, dass** der Strömungssensor (18) in der Kaltwasserleitung (17) angeordnet ist.

19. Zusatzeinrichtung nach einem der Ansprüche 14 bis 18, **dadurch gekennzeichnet, dass** eine Pumpe (19) zur Förderung des Heizwassers (5) durch den Wärmetauscher (16) vorgesehen ist.

20. Zusatzeinrichtung nach Anspruch 19, **dadurch gekennzeichnet, dass** die Pumpe (19) in der Verbindung zwischen dem Wärmetauscher (16) und dem Einlass (8) für den Heizwasserrücklauf angeordnet ist.

21. Zusatzeinrichtung nach Anspruch 19 oder 20, **dadurch gekennzeichnet, dass** die Pumpe (19) mit dem Strömungssensor (18) verbunden ist.

22. Zusatzeinrichtung nach einem der Ansprüche 14 bis 21, **dadurch gekennzeichnet, dass** die Regeleinrichtung (20) durch ein Regelventil gebildet ist.
